**Europäisches Patentamt**

**European Patent Office**

**Office européen des brevets**

(19)

(11) Veröffentlichungsnummer : **0 126 919**
**B1**

(12)                        **EUROPÄISCHE PATENTSCHRIFT**

(45) Veröffentlichungstag der Patentschrift :
12.11.86

(51) Int. Cl.⁴ : **B 62 D 49/08**

(21) Anmeldenummer : **84103937.3**

(22) Anmeldetag : **09.04.84**

(54) **Anordnung eines abnehmbaren Ballastgewichtes an der Frontseite eines Schleppers.**

(30) Priorität : **28.04.83 DE 3315408**

(43) Veröffentlichungstag der Anmeldung :
**05.12.84 Patentblatt 84/49**

(45) Bekanntmachung des Hinweises auf die Patenterteilung : **12.11.86 Patentblatt 86/46**

(84) Benannte Vertragsstaaten :
**AT DE FR GB IT**

(56) Entgegenhaltungen :
**DE-A- 2 232 736**
**DE-A- 2 914 125**
**US-A- 3 220 582**
**US-A- 3 902 735**

(73) Patentinhaber : **Klöckner-Humboldt-Deutz Aktiengesellschaft**
**Deutz-Mülheimer-Strasse 111 Postfach 80 05 09**
**D-5000 Köln 80 (DE)**

(72) Erfinder : **Orth, Werner, Dipl.-Ing.**
**Kuddenberg 7**
**D-5067 Kuerten (DE)**
Erfinder : **Vogel, Walter, Dipl.-Ing.**
**Brüsseler Strasse 93**
**D-5000 Köln 90 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf die Anordnung eines abnehmbaren Ballastgewichtes an der Frontseite eines Schleppers, das mit einer Hubvorrichtung in Verbindung steht, welche das Anheben des Ballastgewichtes aus einer Ruhestellung am Boden in eine Arbeitsstellung an der Frontseite des Schleppers bzw. eine umgekehrte Bewegung gestattet.

Die US-A-3,595,410 befaßt sich mit einem frontseitigen Ballastgewicht für einen Schlepper, das mit einer Hubvorrichtung aus einer Ruhestellung in die Arbeitsstellung bzw. umgekehrt bewegbar ist. Diese Hubvorrichtung weist einen hydraulisch beaufschlagbaren Zylinder auf, der einenends über eine Schwinge mit dem Schlepper verbunden ist und anderenends über beidseitige Gestänge nach Art zweiarmiger Hebel sowohl am Schlepper als auch am Ballastgewicht angreift. Bei Beaufschlagung des Zylinders wird das Ballastgewicht von diesem aus der Ruhestellung über die angelenkten Gestängeteile in Arbeitsstellung gebracht und kann dann an einem ortsfesten Teil des Schleppers mittels vorhandener Schraubenbolzen verankert werden. Nachfolgend wird der zwischen den Vorderrädern des Schleppers weit nach unten ragende Zylinder mitsamt den daran direkt angreifenden Gestängeteile abgebaut, damit die bis zur Vorderachse gegebene Bodenfreiheit erhalten bleibt. Bei dieser bekannten Hubvorrichtung ist jedoch die jeweils vor dem An- bzw. Abbau des Ballastgewichts erforderliche Montage des Hubzylinders mitsamt den damit unmittelbar verbundenen Gestängeteilen oder dergl. umständlich und zeitaufwendig. Außerdem ist die Montage des Ballastgewichtes jeweils nur an solchen Standorten möglich, wo der Zylinder zum Anheben bzw. Abstellen des Ballastgewichts zur Verfügung steht.

Der Erfindung liegt die Aufgabe zugrunde, unter Vermeidung der geschilderten Nachteile ein Ballastgewicht der eingangs umrissenen Art zu schaffen, das ständig mit einer einfachen Hubvorrichtung zum Heben bzw. Senken des Ballastgewichtes ausgestattet ist. Dabei soll die Hubvorrichtung so ausgebildet und angeordnet sein, daß die Bodenfreiheit des Schleppers nicht eingeschränkt wird.

Die Aufgabe wird erfindungsgemäß dadurch gelöst, daß das Ballastgewicht mittels Haken am Schlepper eingehängt ist und zumindest eine nach unten zum Boden hin ausfahrbare Stütze aufweist, die unterhalb einer am Ballastgewicht ebenfalls nach unten absenkbar geführten Grundplatte feststellbar angreift und daß zwischen die Grundplatte und das Ballastgewicht ein oder mehrere in vertikaler Richtung wirkende Druck- und Zugelemente geschaltet sind.

Durch diese Maßnahmen erhält man ein Ballastgewicht, in dem alle zum Heben und Senken bzw. zum Abstellen auf dem Boden erforderlichen Mittel enthalten sind. Dabei genügt für die Bewegung des Ballastgewichtes eine recht einfache Hubvorrichtung, die die Bodenfreiheit in diesem Bereich nicht beeinträchtigt und stets sofort einsatzbereit ist.

In Weiterbildung der Erfindung sind im Ballastgewicht als Druckelement ein hydraulischer Zylinder und als Zugelemente Schraubenfedern vorgesehen. Dabei wird eine herstellungstechnisch einfache Lösung dadurch erreicht, daß der hydraulische Zylinder mittels einer eigenen Pumpe von Hand betätigbar ist.

Ferner kann es auch zweckdienlich sein, wenn als Druck- und Zugelement ein doppeltwirkender hydraulischer Zylinder eingesetzt ist. In diesem Fall ist es vorteilhaft, wenn der hydraulische Zylinder zur Versorgung mit Druckflüssigkeit an das hydraulische System des Schleppers angeschlossen ist.

Es besteht auch die Möglichkeit, als Druck- und Zugelement eine von Hand oder Motorkraft angetriebene Spindel zu verwenden.

Um die Montage des Ballastgewichtes möglichst einfach zu gestalten, ist dasselbe mittels zweier seitlicher Haken an schlepperseitigen ortsfesten Bolzen oder dergl. angehängt.

Zur Erleichterung der Montage ist für ein am Schlepper frontseitig vorhandenes Kupplungsmaul als Zentriermittel beim Anbau des Ballastgewichtes in diesem eine entsprechend ausgebildete Ausnehmung angeordnet. Dabei sind zur Fixierung der ausfahrbaren Stütze und der Grundplatte in ein ortsfestes Teil des Ballastgewichtes eingreifende Sicherungsbolzen vorgesehen, die seitlich herausnehmbar bzw. einsteckbar sind.

Nach einem weiteren Gedanken der Erfindung ist bei einem Ballastgewicht mit mehreren abnehmbaren Einzelgewichten vorgesehen, daß die Einzelgewichte in einen Raum innerhalb des Ballastgewichtes an dort angeordnete Halter quer zur Längsmittelachse des Schleppers nebeneinander einschiebbar sind.

Schließlich besteht im Rahmen der Erfindung auch der Vorschlag, die Einzelgewichte im Ballastgewicht oberhalb der Grundplatte anzuordnen, wobei auf der Grundplatte als Sicherungselement eine bei Betriebsstellung in eine Ausnehmung der Einzelgewichte von unten eingreifende Leiste oder dergl. befestigt ist.

Ein Ausführungsbeispiel der Erfindung wird im folgenden anhand der Zeichnung näher beschrieben. Es zeigt :

Figur 1 in Seitenansicht ein Ballastgewicht mit einer Hubvorrichtung gemäß der Erfindung ;

Figur 2 eine Vorderansicht des Ballastgewichtes gemäß Fig. 1 ;

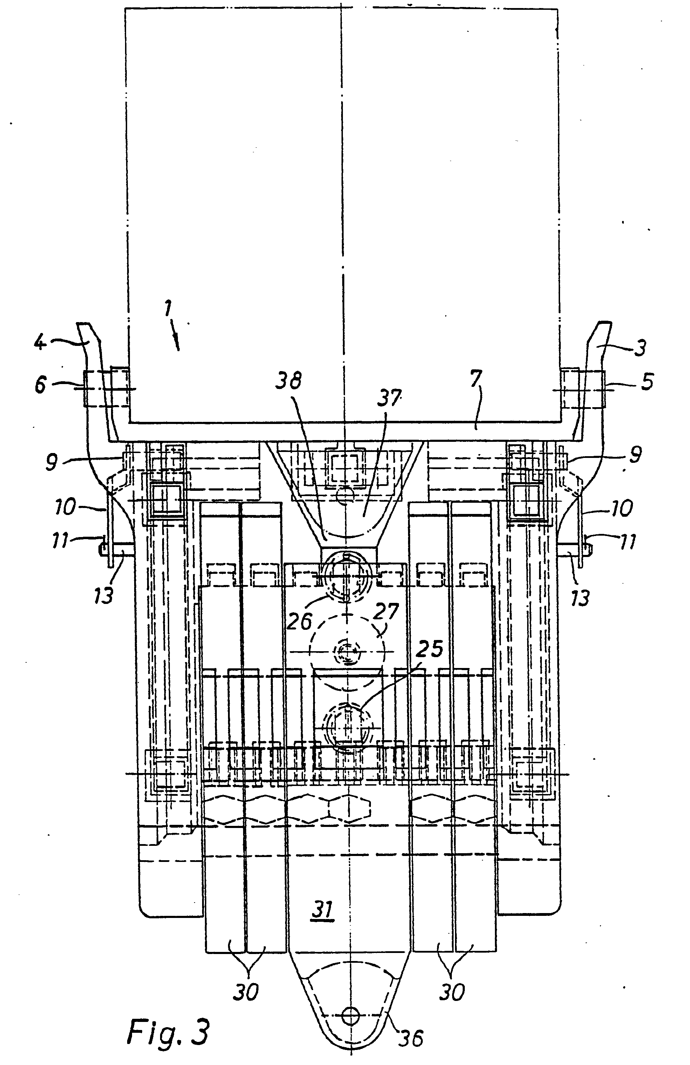

Figur 3 eine Draufsicht auf das Ballastgewicht gemäß der Fig. 1 und 2 ;

Figur 4 eine Seitenansicht des Ballastgewichtes gemäß Fig. 1 mit abgesenkter Stütze ;

Figur 5 das Ballastgewicht mit abgesenkter Grundplatte ;

Figur 6 das Ballastgewicht mit angehobenem Oberteil ;

Figur 7 das Ballastgewicht in Ruhestellung am Boden.

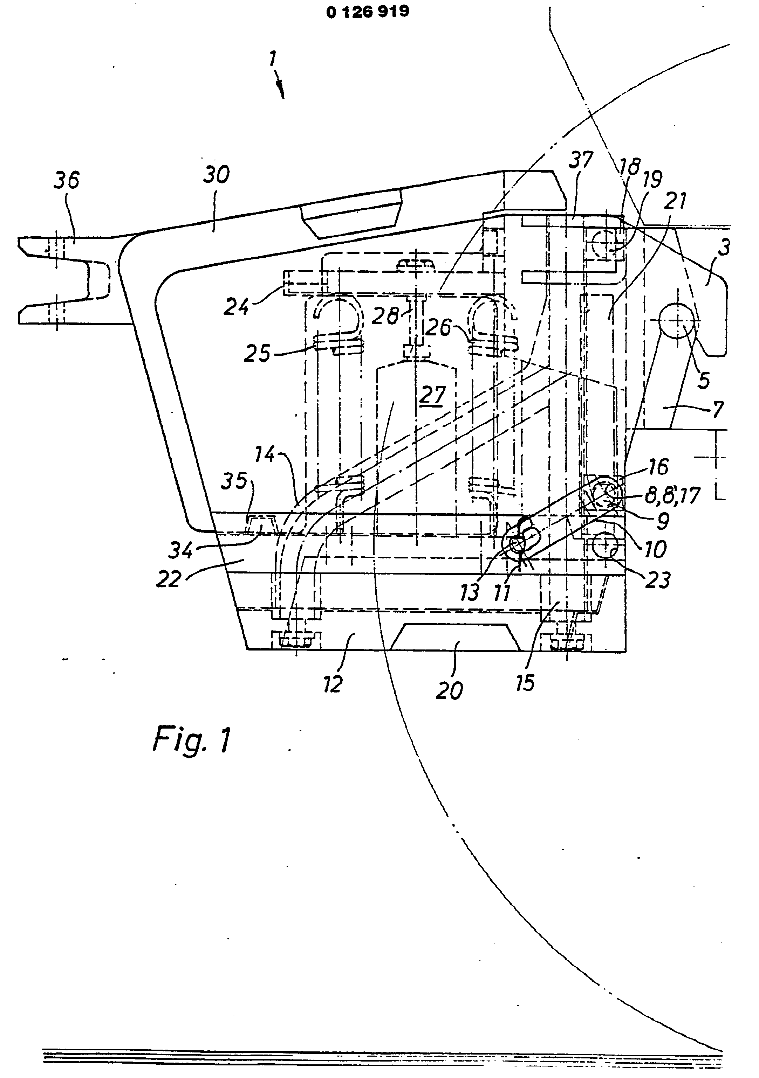

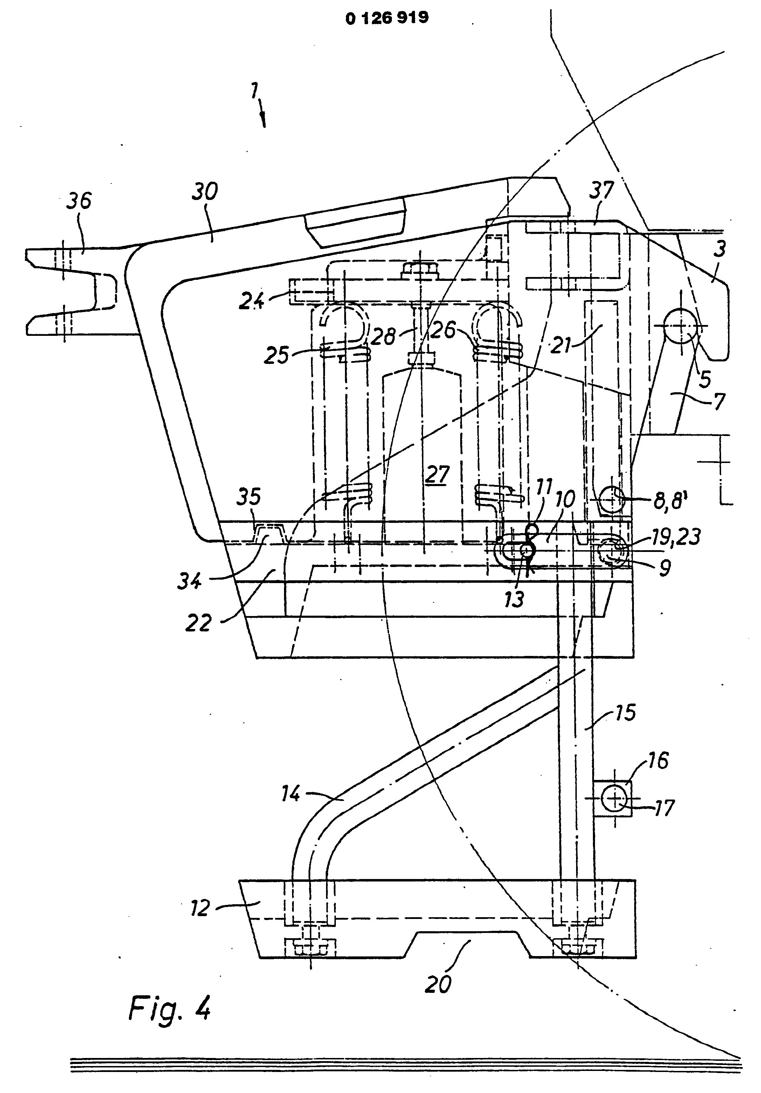

Das dargestellte Ballastgewicht 1 weist als Grundgewicht eine aus einer Anzahl von Teilen gebildete Rahmenkonstruktion auf, die mittels zweier Haken 3, 4 an ortsfesten Bolzen 5, 6 eines angedeuteten Schleppers hängt. Die beiden Bolzen 5, 6 sind Teile eines frontseitig am Schlepper befestigten Tragrahmens 7, der außer den Bolzen 5, 6 im unteren Bereich beiderseits noch mit je einer Bohrung 8 zur Aufnahme von Sicherungsbolzen 9 versehen ist. Beide Sicherungsbolzen 9 greifen bei der Ausgangsstellung gemäß Fig. 1 durch je eine Bohrung 8' in seitlichen Rahmenteilen des Ballastgewichtes 1 in die entsprechende Bohrung 8 des Tragrahmens 7 ein. Als Halterung für jeden der Sicherungsbolzen 9 dient eine Lasche 10, die mittels Federstecker 11 lösbar an ortsfesten Zapfen 13 des Ballastgewichtes verankert sind. Im unteren Bereich des Ballastgewichtes 1 ist beiderseits desselben je eine längliche Stütze 12 angeordnet, an denen je zwei dreieckförmig miteinander verbundene Streben 14, 15 angreifen. Die in dieser Weise miteinander verbundenen Streben 14, 15 bilden Ständer für die Stützen 12, wobei die Streben 15 in vertikaler Richtung verschiebbar im Ballastgewicht 1 geführt sind. Durch diese Anordnung sind die beiden Stützen 12 nach unten ausfahrbar mit dem Ballastgewicht 1 verbunden. An den Streben 15 sind nach hinten gerichtete Laschen 16 befestigt, in deren Bohrungen 17 die Sicherungsbolzen 9 bei der in Fig. 1 gezeigten Ausgangsstellung des Ballastgewichtes 1 mit eingreifen. Ferner sind an den Streben 15 am oberen Ende ebenfalls nach hinten gerichtete gleichartige Laschen 18 befestigt, deren Bohrungen mit 19 bezeichnet sind. Griffmulden 20 in den Stützen 12 erleichtern deren Handhabung bei der später beschriebenen Betätigung. Die beiden Stützen 12 sitzen mit Abstand beiderseits unter einer Grundplatte 22, die an seitlich angeordneten vertikalen Holmen 21 ebenfalls heb- und senkbar am Rahmen des Grundgewichtes geführt ist. An der Grundplatte 22 sitzen die beiden Zapfen 13 zur Aufnahme der Federstecker 11. Außerdem hat die Grundplatte 22 hinten beiderseits je eine Bohrung 23 zur Aufnahme der beiden Sicherungsbolzen 9 in entsicherter Stellung gemäß Darstellung in den Fig. 4 bis 7.

Zwischen der Grundplatte 22 und einem oberhalb derselben befindlichen Rahmenteil 24 des Grundgewichtes sind mit Abstand nebeneinander zwei Zugfedern 25, 26 als Zugelemente eingesetzt. Außerdem ist auf der Grundplatte 22 zwischen den beiden Zugfedern 25, 26 ein hydraulischer Zylinder 27 befestigt, dessen Kolbenstange 28 am Rahmenteil 24 angreift.

In einen Raum innerhalb des Grundgewichtes sind fünf herausnehmbare Einzelgewichte 30 und 31 untergebracht. Die Einzelgewichte 30 sind an je zwei und das Einzelgewicht 31 an sechs rahmenfesten Haltern 32 bzw. 33 durch Einschieben von der Frontseite her aufgehängt. Auf der Grundplatte 22 sitzt eine Leiste 34, die in entsprechende Ausnehmungen 35 der Einzelgewichte 30, 31 eingreift und als Sicherung gegen Herausfallen der Einzelgewichte 30, 31 während des Betriebes dient. Das Einzelgewicht 31 ist vorn mit einem Kupplungsmaul 36 versehen. Für ein an der Frontseite des Schleppers angeordnetes Kupplungsmaul 37 befindet sich im Grundgewicht eine Aussparung 38, die so ausgebildet ist, daß sie bei der Montage des Ballastgewichtes 1 in Verbindung mit dem Kupplungsmaul 37 zur Zentrierung dient.

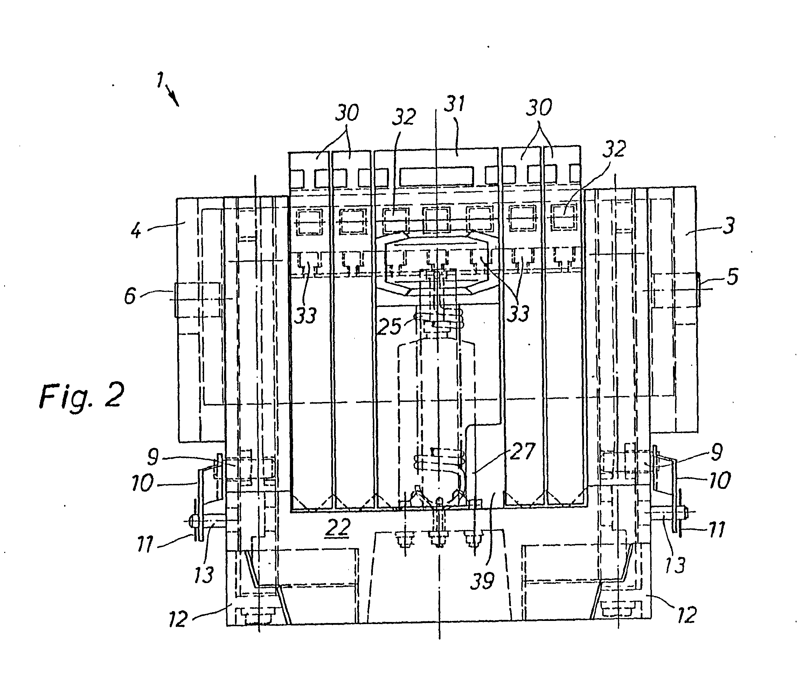

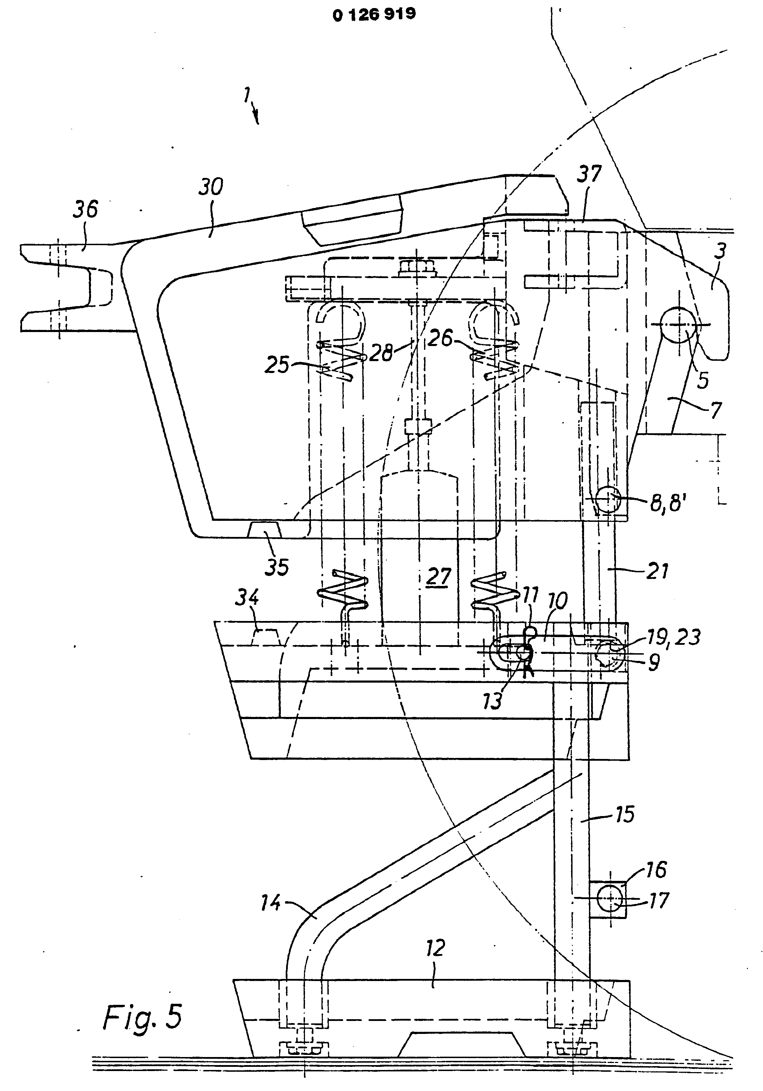

Zum Abbauen des Ballastgewichtes 1 werden nach dem Herausziehen der Federstecker 11 die Laschen 10 mit den Sicherungsbolzen 9 abgenommen. Dabei werden die Stützen 12 durch Anfassen an den Griffmulden 20 herabgelassen. Zur Verwendung des Ballastgewichtes 1 auch bei verschiedenen Reifengrößen und unterschiedlichen Luftdrücken in den Reifen, gehen die Stützen 12 nicht bis zum Boden hinab, sondern werden durch Anschlagen der Laschen 18 an der Grundplatte zunächst mit Abstand oberhalb des Bodens gehalten. In dieser Stellung der Stützen 12 fluchten die Bohrungen 23 in der Grundplatte 22 mit den Bohrungen 19 der an diesen als Anschläge anliegenden Laschen 18. Nun werden die Sicherungsbolzen 9 in die Bohrungen 19, 23 gesteckt und mit den Federsteckern 11 gesichert. Damit sind die Grundplatte 22 sowie die Stützen 12 starr miteinander verbunden. Dieser Arbeitsgang ist in Fig. 4 dargestellt. Durch eine in Fig. 2 sichtbare Öffnung 39 im Einzelgewicht 31 kann mittels einer nicht dargestellten Pumpe und eines daran angreifenden Hebels der hydraulische Zylinder 27 mit Druckflüssigkeit beaufschlagt werden, so daß dieser die Grundplatte 22 mit den daran befestigten Stützen 12 nach unten bewegt, bis diese den Boden berühren. Bei diesem Arbeitsgang, der in Fig. 5 dargestellt ist, werden die beiden Zugfedern 25, 26 vorgespannt.

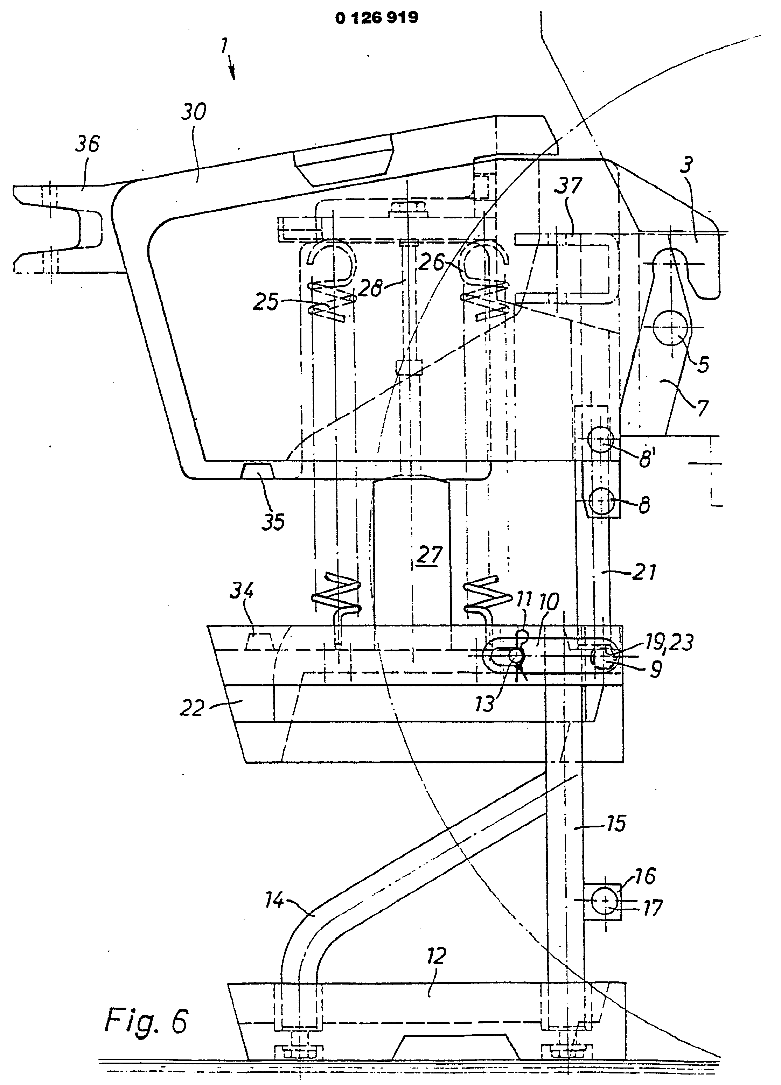

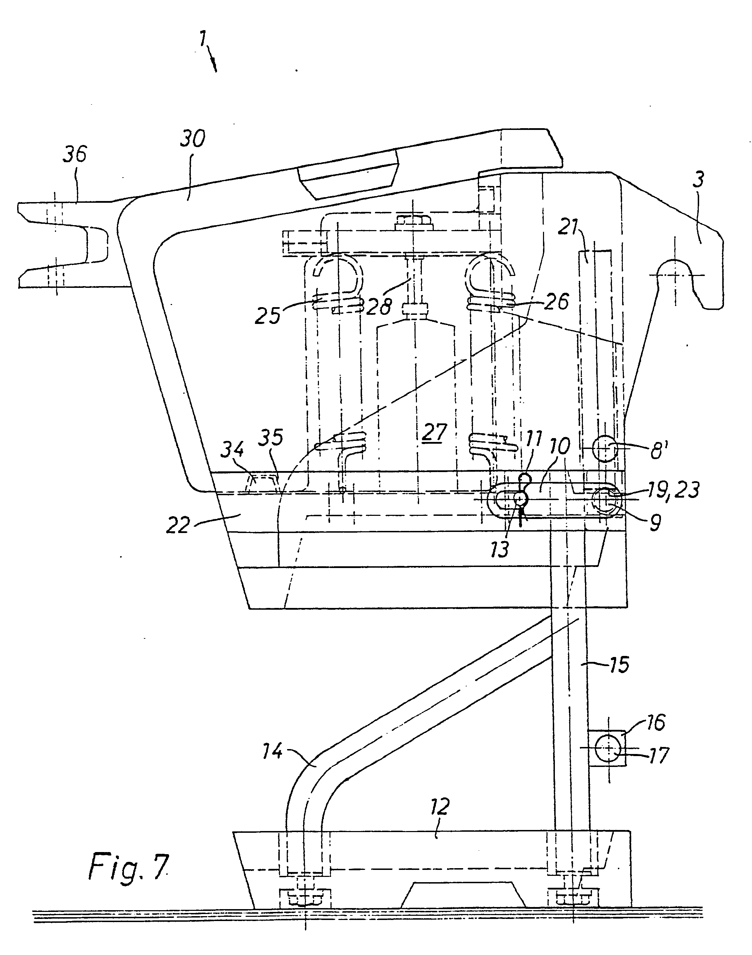

Durch weiteres Betätigen des hydraulischen Zylinders 27 wird dann der obere Teil des Grundgewichtes angehoben, wobei sich die beiden Haken 3, 4 von den Bolzen 5, 6 abheben. Der Hebevorgang ist beendet, sobald die beiden Haken 3, 4 über den Bolzen 5, 6 stehen, wie dies in Fig. 6 gezeigt ist. Anschließend kann der Schlepper ohne Ballastgewicht zurückgesetzt werden. Das Ballastgewicht 1 wird dann durch Entlasten des hydraulischen Zylinders 27 in die in Fig. 7 gezeigte Lagerstellung gebracht.

Der Anbau des Ballastgewichtes 1 erfolgt grundsätzlich in umgekehrter Reihefolge. Zunächst wird der obere Teil des Ballastgewichtes 1 durch Betätigung der Pumpe des hydraulischen Zylinders 27 angehoben, bis die beiden Haken 3, 4 wieder über den Bolzen 5, 6 stehen. Der Schlepper wird dann an das Ballastgewicht herangefahren, wobei die nach hinten schräg verlaufenden beiden Haken 3, 4 als seitliche Führung dienen. Bei der Zentrierung des Ballastgewichtes 1 am Schlepper übernimmt das Zugmaul 37 die Führung, indem dieses in die konische Ausnehmung 38 des Ballastgewichtes 1 hineingleitet.

Sobald die Bolzen 5, 6 am Schlepper mit den Haken 4, 5 fluchten, wird der angehobene Teil des Ballastgewichtes 1 durch Entlasten des Zylinder 27 gesenkt. Dabei greifen die Haken 3, 4 wieder über die Bolzen 5, 6, und bei weiterer Entlastung des Zylinders 27 ziehen die Zugfedern 25, 26 die Grundplatte 22 mit den daran hängenden Stützen 12 nach oben, bis die Grundplatte 22 wieder am Grundgewicht gemäß Fig. 1 anliegt. Sodann werden die Sicherungsbolzen 9 nach dem Lösen der Federstecker 11 aus den Bohrungen 18, 23 herausgezogen. Die Stützen 12 lassen sich nun wieder nach oben in die Ausgangsstellung schieben, wonach dann durch Einstecken der Sicherungsbolzen 9 in die Bohrungen 8, 8' und 17 das Ballastgewicht 1 wieder in Arbeits- bzw. Transportstellung gemäß Fig. 1 gebracht wird.

Die Teilgewichte 30 und 31 sind durch die auf der Grundplatte 22 sitzende Leiste 34 gesichert, indem diese in der Stellung gemäß Fig. 1 in eine durchgehende Ausnehmung 35 der Zusatzgewichte 30, 31 eingreift. Das Herausnehmen bzw. Einsetzen von Einzelgewichten 30, 31 ist demgemäß nur bei abgesenkter Grundplatte 22 gemäß Fig. 5 möglich.

Es besteht aber auch die Möglichkeit, anstelle der beiden Zugfedern 25, 26 und des einfachwirkenden Zylinders 27 einen doppeltwirkenden hydraulischen Zylinder zu verwenden, der die Aufgabe der beiden Zugfedern 25 und 26 mit übernimmt.

**Patentansprüche**

1. Anordnung eines abnehmbaren Ballastgewichtes (1) an der Frontseite eines Schleppers, das mit einer Hubvorrichtungen (25, 26, 27) in Verbindung steht, welche das Anheben des Ballastgewichtes (1) aus einer Ruhestellung am Boden in eine Arbeitsstellung an der Frontseite des Schleppers bzw. eine umgekehrte Bewegung gestattet, dadurch gekennzeichnet, daß das Ballastgewicht (1) mittels Haken (3, 4) am Schlepper eingehängt ist und zumindest eine nach unten zum Boden hin ausfahrbare Stütze (12) aufweist, die unterhalb einer am Ballastgewicht (1) ebenfalls nach unten absenkbar geführten Grundplatte (22) feststellbar angreift und daß zwischen die Grundplatte (22) und das Ballastgewicht (1) ein oder mehrere in vertikaler Richtung wirkende Druck- und Zugelemente (25, 26, 27) geschaltet sind.

2. Anordnung nach Anspruch 1, dadurch gekennzeichnet, daß im Ballastgewicht (1) als Druckelement ein hydraulischer Zylinder (27) und als Zugelemente Schraubenfedern (25, 26) vorgesehen sind.

3. Anordnung nach Anspruch 1, dadurch gekennzeichnet, daß als Druck- und Zugelement ein doppeltwirkender hydraulischer Zylinder eingesetzt ist.

4. Anordnung nach den Ansprüchen 1 bis 3, dadurch gekennzeichnet, daß der hydraulische Zylinder (27) mittels einer eigenen Pumpe von Hand betätigbar ist.

5. Anordnung nach einem der vorhergehenden Ansprüche, dadurch gekennzeichnet, daß der hydraulische Zylinder zur Versorgung mit Druckflüssigkeit an das hydraulische System des Schleppers angeschlossen ist.

6. Anordnung nach einem der vorhergehenden Ansprüche, dadurch gekennzichnet, daß als Druck- und Zugelement eine von Hand oder Motorkraft angetriebene Spindel vorgesehen ist.

7. Anordnung nach einem der vorhergehenden Ansprüche, dadurch gekennzeichnet, daß das Ballastgewicht (1) mittels zweier seitlicher Haken (3, 4) an schlepperseitigen ortsfesten Bolzen (5) angehängt ist.

8. Anordnung nach einem der vorhergehenden Ansprüche, dadurch gekennzeichnet, daß für ein am Schlepper frontseitig vorhandenes Kupplungsmaul (37) als Zentriermittel beim Anbau des Ballastgewichtes (1) in diesem eine entsprechend ausgebildete Ausnehmung (38) angeordnet ist.

9. Anordnung nach einem der vorhergehenden Ansprüche, dadurch gekennzeichnet, daß zur Fixierung der ausfahrbaren Stütze (12) und der Grundplatte (22) in ein ortsfestes Teil (7) des Ballastgewichtes (1) eingreifende Sicherungsbolzen (9) dienen, die seitlich herausnehmbar bzw. einsteckbar sind.

10. Anordnung nach einem der vorhergehenden Ansprüche, dadurch gekennzeichnet, daß das Ballastgewicht mehrere abnehmbare Einzelgewichte (30, 31) aufweist die in einen Raum innerhalb des Ballastgewichtes (1) an dort angeordnete Halter (32, 33) quer zur Längsmittelachse des Schleppers nebeneinander einschiebbar sind.

11. Anordnung nach einem der vorhergehenden Ansprüche, dadurch gekennzeichnet, daß die Einzelgewichte (30, 31) im Ballastgewicht (1) oberhalb der Grundplatte (22) angeordnet sind und daß auf der Grundplatte (22) als Sicherungselement eine bei Betriebsstellung in eine Ausnehmung (35) der Einzelgewichte (30, 31) von unten eingreifende Leiste (34) oder dergl. befestigt ist.

**Claims**

1. An arrangement of a removable ballast weight (1) at the front end of a tractor, the ballast weight being in communication with a lifting system (25, 26, 27) permitting it to be lifted from its inoperative position on the ground to its operative position at the front end of the tractor and *vice versa*, characterized in that the ballast weight (1) is hookable to the tractor by claws (3, 4) and is provided with at least one support (12) arranged to be lowered towards the ground, the support being lockably attached to the ballast weight underneath a base plate (22) which is also lowerably secured to the ballast weight (1), and in that one or more push and pull elements (25, 26, 27) operable in the vertical direction is, or are, disposed between the base plate (22) and the ballast weight (1).

2. An arrangement according to claim 1, characterized in that the push element is a hydraulic cylinder (27) and the pull elements are coiled springs (25, 26), and in that all the elements are disposed within the ballast weight (1).

3. An arrangement according to claim 1, characterized in that a single double-acting hydraulic cylinder constitutes both the push and the pull elements.

4. An arrangement according to any of the claims 1 to 3, characterized in that the hydraulic cylinder (27) is manually operable by means of its own pump.

5. An arrangement according to any of the preceding claims, characterized in that the hydraulic cylinder is connected, for the purpose of supplying it with hydraulic fluid, to the tractor's hydraulic system.

6. An arrangement according to any of the preceding claims, characterized in that a manually or power-driven spindle.

7. An arrangement according to any of the preceding claims, characterized in that the ballast weight (1) is hooked by the claws (3, 4) — a respective one of which is arranged on each of the weight's side walls — to gudgeons (5) of the tractor.

8. An arrangement according to any of the preceding claims, characterized in that the ballast weight (1) is provided, for the purpose of centering it when being hooked to the tractor, with a recess (38) shaped to match a coupling mouth (37) at the tractor's front end.

9. An arrangement according to any of the preceding claims, characterized in that laterally insertable and removable locking pins (9) arranged to engage a nonmovable part (7) of the ballast weight (1) serve to lock the lowerable support (12) and base plate (22).

10. An arrangement according to any of the preceding claims, characterized in that the ballast weight comprises a number of removable individual weights (30, 31) insertable in a direction transverse to the tractor's longitudinal axis into a space within the ballast weight (1) and on to brackets (32, 33) located in this space.

11. An arrangement according to any of the preceding claims, characterized in that the individual weights (30, 31) within the ballast weight (1) are arranged above the base plate (22), and in that a bar (34) or the like is fastened — as a safety element — to the base plate (22) and engages a recess (35) provided in and extending upwardly from the bottom of each of the individual weights (30, 31).

**Revendications**

1. Disposition d'une masse de ballastage (1) amovible à l'avant d'un tracteur agricole, cette masse étant reliée à un dispositif de levage (25, 26, 27) qui permet de soulever la masse de ballastage (1) à partir d'une position de repos sur le sol dans une position de travail à l'avant du tracteur ou qui permet un déplacement en sens inverse, disposition caractérisée en ce que la masse de ballastage (1) est suspendue au tracteur au moyen de crochets (3, 4) et comporte au moins un appui (12) susceptible d'être déplacé vers le bas jusqu'au sol, et qui vient en prise, en étant susceptible d'y être bloqué, au-dessous d'une plaque de base (22) guidée sur la masse de ballastage (1), en étant également susceptible d'être abaissée vers le bas, tandis qu'entre cette plaque de base (22) et la masse de ballastage (1), est monté ou sont montés, un ou plusieurs éléments de pression et de traction (25, 26, 27) agissant en direction verticale.

2. Disposition selon la revendication 1, caractérisée en ce qu'il est prévu dans la masse de ballastage (1), un vérin hydraulique (27) en tant qu'élément de pression, et des ressorts hélicoïdaux (25, 26) en tant qu'éléments de traction.

3. Disposition selon la revendication 1, caractérisée en ce qu'un vérin hydraulique à double effet est mis en œuvre en tant qu'éléments de pression et de traction.

4. Disposition selon les revendications 1 à 3, caractérisée en ce que le vérin hydraulique (27) est susceptible d'être actionné à la main au moyen d'une pompe distincte.

5. Disposition selon une des précédentes revendications, caractérisée en ce que le vérin hydraulique, pour permettre son alimentation en liquide sous pression, est raccordé au système hydraulique du tracteur.

6. Disposition selon une des précédentes revendications, caractérisée en ce qu'il est prévu comme élément de pression et de traction, une broche filetée entraînée manuellement ou par un moteur.

7. Disposition selon une des précédentes revendications, caractérisée en ce que la masse de ballastage (1) est suspendue, au moyen de deux crochets latéraux (3, 4), à des goujons (5) montés à poste fixe sur le tracteur.

8. Disposition selon une des précédentes revendications, caractérisée en ce que, pour une mâchoire d'accouplement (37) prévue à l'avant du tracteur comme moyen de centrage lors du montage de la masse de ballastage (1), un évidement (38) de conformation correspondante est ménagé dans cette masse de ballastage.

9. Disposition selon une des précédentes revendications, caractérisée en ce que des goujons de blocage (9), venant en prise dans une partie fixe (7) de la masse de ballastage (1) et qui sont susceptibles d'être retirés ou enfoncés latéralement, servent à la fixation des appuis mobiles (12) et de la plaque de base (22).

10. Disposition selon une des précédentes revendications, caractérisée en ce que la masse de ballastage comporte plusieurs masses individuelles amovibles, qui sont susceptibles d'être insérées les unes à côté des autres, transversalement par rapport à l'axe médian longitudinal du tracteur, dans un espace à l'intérieur de la masse de ballastage (1) sur des supports (32, 33) qui y sont disposés.

11. Disposition selon une des précédentes revendications, caractérisée en ce que les masses individuelles (30, 31) dans la masse de ballastage (1) sont disposées au-dessus de la plaque de base (22), et que sur cette plaque de base (22) est fixé, pour servir d'élément de blocage, une barre (34) ou un organe analogue qui, dans la position de fonctionnement, vient en prise à partir du bas dans un évidement (35) des masses individuelles (30, 31).

Fig. 1

Fig. 2

0 126 919

Fig. 3

Fig. 4

*Fig. 5*

**Fig. 6**

Fig. 7